# EUROPEAN PATENT APPLICATION

(11) **EP 4 752 063 A1**
(43) Date of publication of application: **03.06.2026**
(21) Application number: 25219139.0
(22) Date of filing: 27.11.2025
(51) Int. Cl.: B64D 27/33, B64D 33/08

(54) **AIRCRAFT PROPULSION SYSTEM THERMAL MANAGEMENT SYSTEM**

(30) Priority: 27.11.2024 US 202418962818
(71) Applicant: Pratt & Whitney Canada Corp., (01BE5) Longueuil, QC J4G 1A1 (CA)
(72) Inventor: DUCHENE, Thibaut E., (01BE5) Longueuil, J4G 1A1 (CA); LOGAN, John Adam, (01BE5) Longueuil, J4G 1A1 (CA); GAUTHIER, Felix, (01BE5) Longueuil, J4G 1A1 (CA); BERGERON, Sebastien, (01BE5) Longueuil, J4G 1A1 (CA)
(74) Representative: Dehns

(57) **Abstract**

A propulsion system for an aircraft (20) is provided that includes a thermal engine (30), an electrical power motive system (28), a propulsion unit (40), and a thermal management system (38). The electrical power motive system (28) has an electric motor (46). The thermal management system (38) includes a first heat exchanger (56), and is configured to cycle a flow of lubricant (64) into and out of the thermal engine (30) and into and out of the first heat exchanger (56) in a first loop (60), and is configured to cycle a flow of coolant (66) into and out of thermal engagement with the electrical power motive system (28) and into and out of the first heat exchanger (56) in a second loop (62). The first heat exchanger (56) is configured to permit heat transfer between the flow of lubricant (64) and the flow of coolant (66) to occur within the first heat exchanger (56).

## Description

### BACKGROUND OF THE INVENTION

### 1. Technical Field

The present disclosure relates generally to thermal management systems for aircraft propulsion systems, and more particularly, thermal management systems for aircraft employing propulsion systems that include a thermal engine and an electric motor.

### 2. Background Information

Hybrid-electric propulsion (HEP) systems and electric propulsion systems provide an attractive option for powering aircraft. HEP systems and electric propulsion systems may be configured to provide the requisite thrust using a thermal engine (e.g., a gas turbine engine or an internal combustion engine), or using an electric motor, or some combination thereof. Improvements in the operation of aircraft propulsion systems are desirable.

### SUMMARY

According to an aspect of the present disclosure, a hybrid-electric propulsion (HEP) system for an aircraft is provided that includes a thermal engine, an electrical power motive system, a propulsion unit, and a thermal management system. The electrical power motive system has an electric motor. The propulsion unit is in drive communication with the thermal engine and the electric motor. The thermal management system includes a first heat exchanger, and is configured to cycle a flow of lubricant into and out of the thermal engine and into and out of the first heat exchanger in a first loop, and is configured to cycle a flow of coolant into and out of thermal engagement with the electrical power motive system and into and out of the first heat exchanger in a second loop. The first heat exchanger is configured to permit heat transfer between the flow of lubricant and the flow of coolant to occur within the first heat exchanger.

In any of the aspects or embodiments described above and herein, the thermal management system may include a second heat exchanger in fluid communication with the second loop downstream of the first heat exchanger and upstream of the electrical power motive system.

In any of the aspects or embodiments described above and herein, the thermal management system may include a bypass valve that is controllable to bypass at least a portion of the flow of coolant around the second heat exchanger.

In any of the aspects or embodiments described above and herein, the second heat exchanger may be configured to receive the coolant within the second loop and may be configured to receive a flow of air at an air temperature that is lower than a temperature of the coolant received by the second heat exchanger.

In any of the aspects or embodiments described above and herein, the second heat exchanger may be configured to receive the coolant within the second loop and may be configured to receive a flow of fuel at a fuel temperature that is lower than a temperature of the coolant received by the second heat exchanger.

In any of the aspects or embodiments described above and herein, the thermal management system may be configured to operate in a lubricant cooling mode. In the lubricant cooling mode, the thermal engine may be operating to provide motive force to the propulsion unit and may provide the lubricant to the first heat exchanger at a first temperature, and the electrical power motive system may be operating and may provide the coolant to the first heat exchanger at a second temperature, wherein the first temperature is greater than the second temperature. In the lubricant cooling mode, the heat transfer between the lubricant and the coolant that occurs within the first heat exchanger causes the lubricant to decrease in temperature from the first temperature to a third temperature, and causes the coolant to increase in temperature from the second temperature to a fourth temperature.

In any of the aspects or embodiments described above and herein, the second heat exchanger may be configured to cause the coolant to decrease in temperature from the fourth temperature to a fifth temperature.

In any of the aspects or embodiments described above and herein, within the electrical power motive system, the electric motor may be operating to provide motive force to the propulsion unit and to produce thermal energy that is transferred to the coolant.

In any of the aspects or embodiments described above and herein, the electrical power motive system may include an electrical energy storage device and within the electrical power motive system, the electrical energy storage device may be operating to provide electrical energy to drive the electric motor and to produce thermal energy that is transferred to the coolant.

In any of the aspects or embodiments described above and herein, the electrical power motive system may include an electrical generator and an electrical energy storage device, and within the electrical power motive system, the electrical generator energy storage device may be operating to provide electrical energy to drive the electrical energy storage device and to produce thermal energy that is transferred to the coolant.

In any of the aspects or embodiments described above and herein, the thermal management system may be configured to operate in a lubricant heating mode wherein the thermal engine is in a non-operating mode and provides the lubricant to the first heat exchanger at a first temperature, and the electrical power motive system is operating and provides the coolant to the first heat exchanger at a second temperature, wherein the first temperature is less than the second temperature. In the lubricant heating mode, heat transfer between the lubricant and the coolant occurs within the first heat exchanger that causes the lubricant to increase in temperature from the first temperature to a third temperature, and causes the coolant to decrease in temperature from the second temperature to a fourth temperature.

According to an aspect of the present disclosure, an aircraft propulsion system is provided that includes a first aircraft propulsion system, a second aircraft propulsion system, and a thermal management system. The first aircraft propulsion system includes a thermal engine, a lubrication system, and a first propulsion unit. The lubrication system is configured to cycle a lubricant through the thermal engine. The first aircraft propulsion system is configured to selectively provide motive power to the first propulsion unit using the thermal engine. The second aircraft propulsion system includes an electric motor and a second propulsion unit. The second aircraft propulsion system is configured to selectively provide motive power to the second propulsion unit using the electric motor. The thermal management system includes a first heat exchanger and a second heat exchanger. The thermal management system is configured to cycle a flow of the lubricant into and out of the first heat exchanger in a first loop, and is configured to cycle a flow of coolant into and out of thermal engagement with the electric motor and into and out of the first heat exchanger in a second loop. The first heat exchanger is configured to permit heat transfer between the flow of lubricant and the flow of coolant to occur within the first heat exchanger.

In any of the aspects or embodiments described above and herein, the second heat exchanger may be in fluid communication with the second loop downstream of the first heat exchanger and upstream of the electric motor, and the thermal management system may be configured to operate in a lubricant cooling mode, and in the lubricant cooling mode the thermal engine may provide motive force to the first propulsion unit and may provide the lubricant to the first heat exchanger at a first temperature, and the electric motor may provide motive force to the second propulsion unit and the thermal management system may cycle coolant to the first heat exchanger at a second temperature, wherein the first temperature is greater than the second temperature. The heat transfer between the lubricant and the coolant that occurs within the first heat exchanger may cause the lubricant to decrease in temperature from the first temperature to a third temperature, and may cause the coolant to increase in temperature from the second temperature to a fourth temperature.

In any of the aspects or embodiments described above and herein, the second heat exchanger may be in fluid communication with the second loop downstream of the first heat exchanger and upstream of the electric motor. The thermal management system may be configured to operate in a lubricant heating mode, and in the lubricant heating mode the thermal engine may be in a non-operational mode and may provide the lubricant to the first heat exchanger at a first temperature, and the electric motor may provide motive force to the second propulsion unit and the thermal management system may cycle coolant to the first heat exchanger at a second temperature, wherein the first temperature is less than the second temperature. The heat transfer between the lubricant and the coolant that occurs within the first heat exchanger may cause the lubricant to increase in temperature from the first temperature to a third temperature, and may cause the coolant to decrease in temperature from the second temperature to a fourth temperature.

According to an aspect of the present disclosure, a method of thermally managing a hybrid-electric propulsion (HEP) system that includes a thermal engine, an electrical power motive system having an electric motor, and a propulsion unit in drive communication with the thermal engine and the electric motor is provided. The method includes: cycling a flow of lubricant into and out of the thermal engine and into and out of a first heat exchanger in a first loop, and cycling a flow of coolant into and out of thermal engagement with the electrical power motive system and into and out of the first heat exchanger in a second loop. The first heat exchanger is configured to permit heat transfer between the flow of lubricant and the flow of coolant to occur within the first heat exchanger.

In any of the aspects or embodiments described above and herein, the method may include operating the HEP system in a lubricant cooling mode, wherein in the lubricant cooling mode the thermal engine is operating to provide motive force to the propulsion unit and provides the lubricant to the first heat exchanger at a first temperature, and the electrical power motive system is operating and provides the coolant to the first heat exchanger at a second temperature, wherein the first temperature is greater than the second temperature. The heat transfer between the lubricant and the coolant that occurs within the first heat exchanger may cause the lubricant to decrease in temperature from the first temperature to a third temperature, and may cause the coolant to increase in temperature from the second temperature to a fourth temperature.

In any of the aspects or embodiments described above and herein, the method may include: operating the HEP system in a lubricant heating mode, wherein in the lubricant heating mode the thermal engine is in a non-operating mode and provides the lubricant to the first heat exchanger at a first temperature, and the electrical power motive system is operating and provides the coolant to the first heat exchanger at a second temperature, wherein the first temperature is less than the second temperature. The heat transfer between the lubricant and the coolant that occurs within the first heat exchanger causes the lubricant to increase in temperature from the first temperature to a third temperature, and causes the coolant to decrease in temperature from the second temperature to a fourth temperature.

The foregoing features and elements may be combined in various combinations without exclusivity, unless expressly indicated otherwise. For example, aspects and/or embodiments of the present disclosure may include any one or more of the individual features or elements disclosed above and/or below alone or in any combination thereof. These features and elements as well as the operation thereof will become more apparent in light of the following description and the accompanying drawings. It should be understood, however, the following description and drawings are intended to be exemplary in nature and non-limiting.

### BRIEF DESCRIPTION OF THE DRAWINGS

FIG. 1 is a diagrammatic illustration of an aircraft.
FIG. 2 is a diagrammatic illustration of an hybrid-electric propulsion (HEP) system embodiment according to an embodiment of the present disclosure.
FIG. 3 is a diagrammatic illustration of a gas turbine engine that may be used within embodiments of the present disclosure.
FIG. 4 is a diagrammatic illustration of a present disclosure system embodiment.
FIG. 4A is a diagrammatic illustration of a present disclosure system embodiment.
FIG. 4B is a diagrammatic illustration of a second heat exchanger embodiment.
FIG. 5 is a diagrammatic illustration of a present disclosure system embodiment.
FIG. 6 is a diagrammatic illustration of a present disclosure system embodiment.
FIG. 7 is a diagrammatic illustration of a present disclosure system embodiment.

### DETAILED DESCRIPTION

The present disclosure is directed to a thermal management system for use with an aircraft propulsion system and/or to aircraft propulsion system that incorporates the thermal management system.

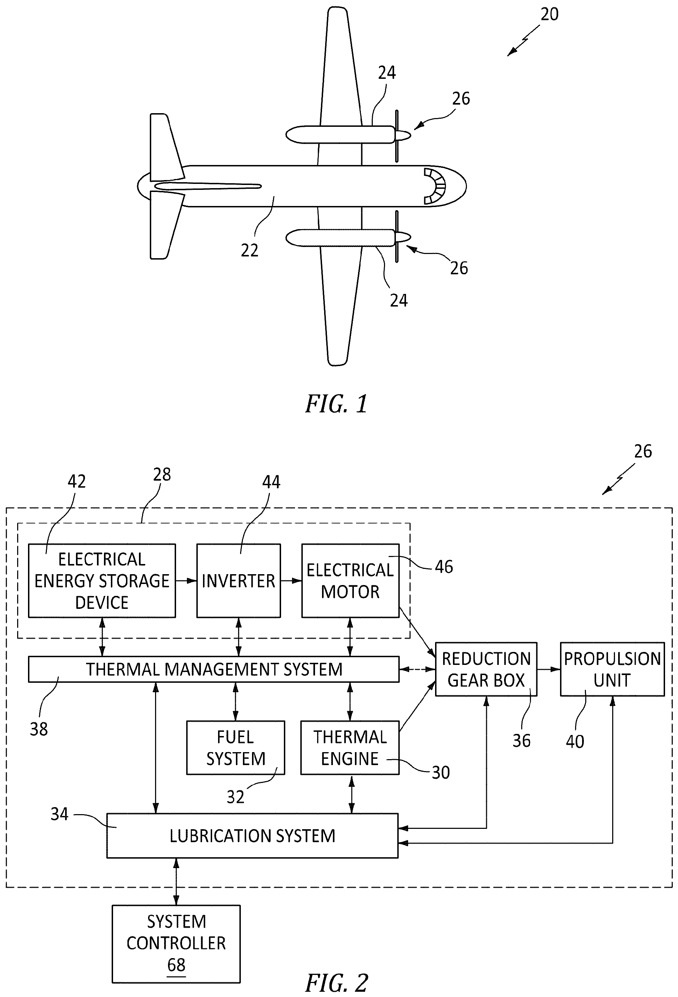

FIG. 1 illustrates a conventional fixed wing aircraft 20 that may utilize embodiments of the present disclosure. The aircraft includes a fuselage 22 and a pair of nacelles 24. Each nacelle 24 houses an aircraft propulsion system 26 that directly or indirectly provides thrust for the aircraft 20. As will be detailed herein, an aircraft propulsion system 26 according to embodiments of the present disclosure may include an aircraft propulsion system 26 powered solely by a thermal engine, or an aircraft propulsion system 26 powered solely by one or more electric motors, or an aircraft propulsion system 26 powered solely by a hybrid-electric propulsion (HEP) system.

To facilitate the description of the present disclosure, an embodiment of the present disclosure that utilizes a HEP system will be initially described. FIG. 2 diagrammatically illustrates an embodiment of a present disclosure aircraft propulsion system 26 in the form of a hybrid-electric propulsion (HEP) system that includes an electrical power motive system 28, a thermal engine 30, a thermal engine fuel system 32, a lubrication system 34, a reduction gear box 36, a thermal management system 38, and a propulsion unit 40. The electrical power motive system 28 includes an electrical energy storage device 42, an inverter 44, and an electric motor 46.

The electrical energy storage device 42 is configured to selectively store electrical energy in a first operational mode (i.e., a charging mode), and to produce electrical energy in a second operational mode (i.e., a discharging mode). A non-limiting example of an electrical energy storage device 42 that can be charged and discharged is a battery. The battery may be a single battery, or a plurality of battery modules (e.g., battery packs), battery cells, and/or the like electrically connected together in series and/or parallel. The present disclosure is not limited to any particular battery configuration. Another example of an electrical energy storage device 42 that can be charged and discharged is a supercapacitor.

The electric motor 46 may be an alternating current (AC) motor configured to rotationally drive a component. For example, the electric motor 46 may be configured to provide rotational drive to the gear box 36 or may be configured to provide rotational drive to a thermal engine 30. The inverter 44 may be a part of a control system that includes hardware and controls for providing electrical power to the electric motor 46, and for providing electrical power to and from the electrical energy storage device 42.

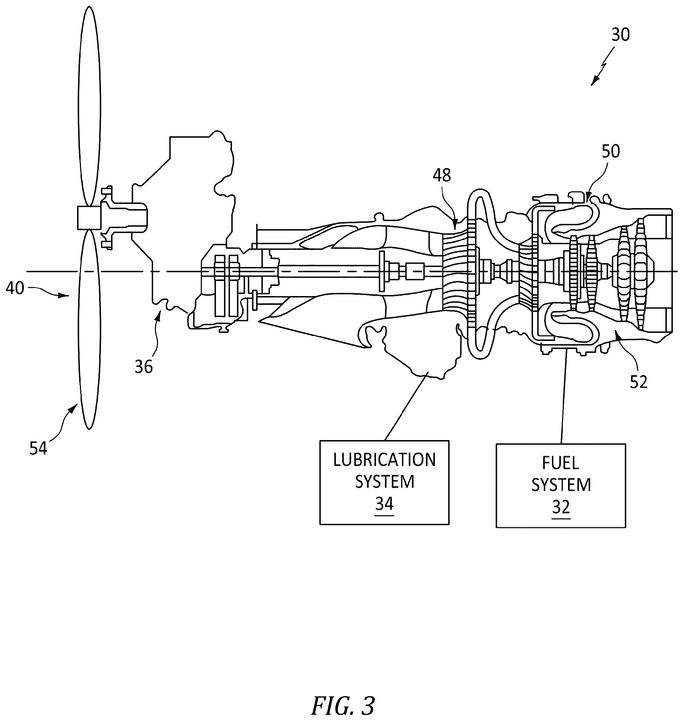

FIG. 3 diagrammatically illustrates a thermal engine 30 in the form of a gas turbine engine that includes a compressor section 48, a combustion section 50, and a turbine section 52. A propulsion unit 40 is shown connected to the gas turbine engine by a reduction gear box 36. Air enters the engine and is worked to a higher pressure and temperature within the compressor section 48. The worked air enters the combustion section 50 and is mixed with fuel and is combusted. The combustion products and any residual air enters the turbine section 52 and drives one or more turbine rotor stages. The turbine rotor stages, in turn, power the compressor section 48 and the propulsion unit 40. The air (and combustion products in the turbine section) follow a gas path that may be referred to as the "core gas path". The present disclosure is not limited to any particular gas turbine engine configuration, and may be used with other thermal engine 30 types including an internal combustion engine.

The terms "forward", "leading", "aft, and "trailing" are used herein to indicate the relative position of a component or surface. As core gas air passes through a gas turbine engine, a "leading edge" of a stator vane or rotor blade encounters core gas air before the "trailing edge" of the same. In an engine like that shown in FIG. 3, the compressor section 48 is "forward" of the turbine section 52 and the turbine section 52 is "aft" of the compressor section 48. The terms "upstream" and "downstream" used herein refer to the direction of a gas flow passing through an annular gas path of the turbine engine. It should also be noted that the terms "radial" and "circumferential" are used herein with respect to the rotational axis of the turbine engine.

The propulsion unit 40 may include a propeller arrangement 54 (e.g., see FIG. 3) for a fixed wing aircraft, or may be configured as part of a rotor blade arrangement for a rotary powered aircraft (e.g., a helicopter or tilt-rotor).

The thermal engine fuel system 32 provides fuel from a fuel storage device (e.g., a fuel tank - not shown) to the thermal engine 30. The fuel system 32 includes conduits (e.g., tubing, piping, or the like) and at least one pump, and may include additional fluid control components such as valving, filters, etc. The present disclosure is not limited to any particular type of fuel. Non-limiting examples of fuel types include aviation gas, kerosene, sustainable aviation fuel (SAF), hydrogen, and the like. The present disclosure is not limited to particular fuel system 32 configuration, other than is described herein.

The lubrication system 34 is configured to cycle a lubricant 64 (e.g., engine oil) from a lubricant storage device (e.g., a lubricant tank - not shown) to the thermal engine 30 and to the gear box 36, where the lubricant 64 is utilized for lubrication purposes and/or cooling purposes, and back to the storage device. In some embodiments (e.g., as shown diagrammatically in FIG. 2), the lubrication system 34 may also provide lubricant 64 to the propulsion unit 40. Typically, the lubricant 64 is pumped from the lubricant tank (e.g., by a mechanical pump, or an electro-mechanical pump, or the like) to the various components. The present disclosure is not limited to any particular type of lubricant 64; e.g., conventional engine oil, synthetic engine oil, or the like are examples of lubricants that may be used. The present disclosure is not limited to any particular lubrication system 34 configuration, other than is described herein; e.g., the present disclosure does not require a lubrication system 34 that provides lubricant 64 to a gear box 36 and/or to a propulsion unit 40.

In some embodiments, the thermal engine 30 may include a cooling system that is independent of the lubrication system 34. The cooling system may cycle a cooling fluid between segments of the thermal engine 30 and a heat exchanger to remove thermal energy form the thermal engine 30.

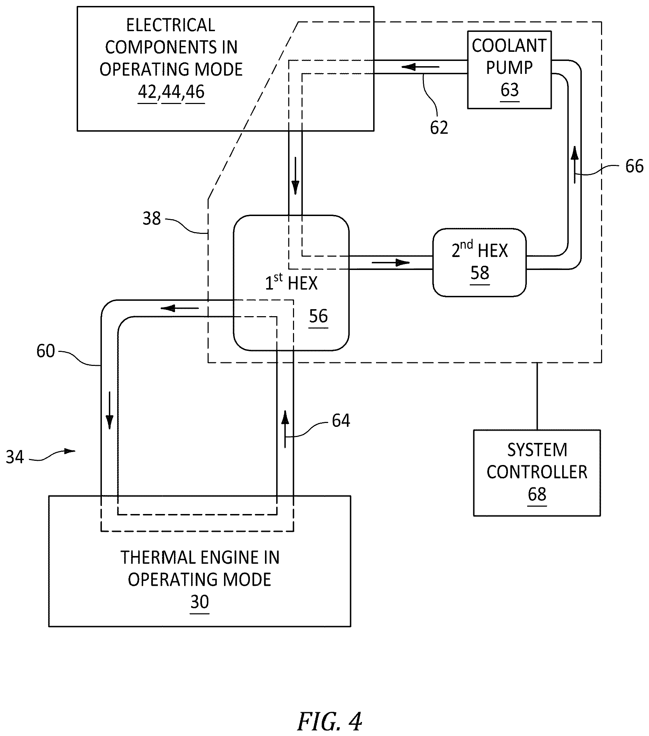

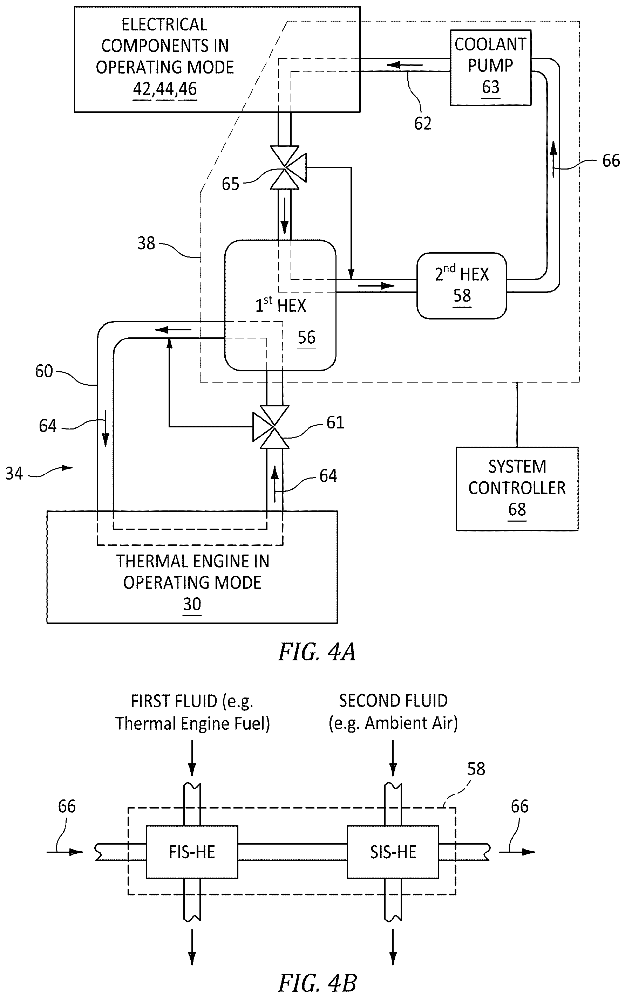

Referring to FIGS. 4-7, the thermal management system 38 includes a first heat exchanger 56 and a second heat exchanger 58. The first heat exchanger 56 may be a two-fluid heat exchanger that is in fluid communication with the thermal engine 30 in a first loop 60, and in fluid communication with the electrical components in a second loop 62. The first heat exchanger 56 is configured to allow thermal energy to transfer from one fluid (e.g., thermal engine lubricant 64) to a second fluid (e.g., an electrical component coolant 66), or vice versa as will be described in greater detail herein. The first heat exchanger 56 is not limited to any particular configuration other than the two fluids 64, 66 are maintained separate from one another; i.e., no direct contact or mixing between the fluids. A crossflow heat exchanger is a non-limiting example of an acceptable configuration for the first heat exchanger 56.

The second heat exchanger 58 is configured to allow thermal energy to transfer between electrical component coolant 66 and an additional fluid such as thermal engine fuel or air (e.g., bypass air, ambient air, or compressor bleed air). The second heat exchanger 58 is not limited to any particular configuration other than the two fluids are maintained separate from one another; i.e., no direct contact or mixing between the fluids. A crossflow heat exchanger is a non-limiting example of an acceptable configuration for the second heat exchanger 58. It should be noted that FIGS. 4-7 diagrammatically illustrate the second heat exchanger 58 as a single unit to facilitate the description. The present disclosure is not limited to second heat exchanger 58 in the form of a single two-fluid heat exchanger. For example as shown diagrammatically in FIG. 4B, in some embodiments the second heat exchanger may include a plurality of heat exchangers in series; e.g., a "first-in-series" heat exchanger (e.g., "FIS-HE") wherein heat transfer occurs between the electrical component coolant 66 and a first fluid (e.g., thermal engine fuel) and a "second-in-series" heat exchanger ("SIS-HE") wherein heat transfer occurs between the electrical component coolant 66 and a second fluid (e.g., ambient air). Hence, the present disclosure contemplates that the second heat exchanger 58 may include one or more heat exchangers and two or more fluids. The second heat exchanger embodiments described herein are provided as examples and the present disclosure is not intended to be limited thereto.

The first loop 60 provides the path through which lubricant 64 is cycled, via the lubrication system 34 through the thermal engine 30 and through the first heat exchanger 56. Other aircraft propulsion system 26 components (e.g., a gear box 36, propulsion unit 40, and the like) may be included within the first loop 60. The first loop 60 may include various pathways within the thermal engine 30; e.g., source tubing that provides the lubricant 64 to and from bearing cavities and/or other thermal engine 30 components, scavenging systems for collecting the lubricant 64 downstream of the bearing cavities and/or other thermal engine 30 components, and the like. In FIG. 3, the first loop 60 is shown diagrammatically in simplistic form to facilitate the description of the present disclosure. The present disclosure is not limited to any particular first loop 60 configuration.

The second loop 62 provides the path through which an electrical component coolant 66 is cycled. In some embodiments, the second loop 62 may include a coolant pump 63 to drive the coolant 66 through the second loop 62. The coolant 66 may be any type of liquid that can be used within the operating temperature of the aircraft. A non-limiting example of an acceptable coolant 66 is a glycol-based liquid. Electrical components that may be cooled by the second loop 62 include, but are not limited to, the electrical energy storage device 42 (e.g., batteries), an electric motor 46, an electrical generator, an inverter 44, or the like. In some instances the coolant 66 may be engaged directly with the electrical component (e.g., an electric motor 46 or an electrical generator with a coolant jacket) and in other instances, the electrical component may be disposed within an air environment that accepts thermal energy from the electrical component and that environmental air is processed through a heat exchanger (not shown) to transfer thermal energy to the coolant 66. Here again, the second loop 62 is shown diagrammatically in simplistic form in FIG. 3 to facilitate the description of the present disclosure. The present disclosure is not limited to any particular second loop 62 configuration.

Referring to FIG. 4A, in some embodiments the thermal management system 38 may include a first flow control device (e.g., a bypass valve 61) engaged with the first loop 60 that is configured to allow the flow of engine lubricant 64 through the first heat exchanger 56 to be controlled. In similar fashion, in some embodiments the thermal management system 38 may include a second flow control device (e.g., bypass valve 65) engaged with the second loop 62 that is configured to allow the flow of electrical component coolant 66 through the first heat exchanger 56 to be controlled. The present disclosure is not limited to any particular type of flow control devices 61, 65; e.g., mechanical or electro-mechanical bypass valves are a non-limiting example of a flow control device that may be used.

Some embodiments of the present disclosure may include a system controller 68 but not all embodiments require a system controller 68. The term "system controller" as used herein refers to a device that may include any type of computing device, computational circuit, processor(s), CPU, computer, or the like capable of executing a series of instructions that are stored in memory. The instructions may include an operating system, and/or executable software modules such as program files, system data, buffers, drivers, utilities, and the like. The executable instructions may apply to any functionality described herein to enable the present disclosure thermal management system 38 or system components (e.g., valves, pumps, sensors, and the like) to accomplish the same algorithmically and/or coordination of system components. The system controller 68 may include or may be in communication with one or more memory devices. The present disclosure is not limited to any particular type of memory device, and the memory device may store instructions and/or data in a non-transitory manner. Examples of memory devices that may be used include read-only memory, random access memory, volatile memory, non-volatile memory, static memory, dynamic memory, flash memory, cache memory, and/or any device that stores digital information.

The system controller 68 is shown in the FIGS. 2 and 4-7 and described herein as an independent component to facilitate the description. The system controller 68 may alternatively be integrated within another controller present with the aircraft propulsion system 26 and that controller may be configured to perform the functionality detailed herein. The present disclosure is not limited to any particular controller architecture unless specifically stated herein.

The present disclosure thermal management system 38 may be configured and controlled to operate in two or more modes of operation. In a first mode of operation (i.e., an engine lubricant cooling mode) as shown diagrammatically in FIG. 4, the aircraft propulsion system 26 is operating with an electrical component in an operating mode and the thermal engine 30 in an operating mode. The operating electrical component 42, 44, 46 may include the electric motor 46 providing motive force to the propulsion unit 40, or an electrical generator (not shown) producing electrical energy, or the electric energy storage device 42 (e.g., batteries) discharging electrical energy, or the like, or any combination thereof. To facilitate the description herein, the electrical component will be described in terms of the electric motor 46 unless otherwise indicated. The electrical component is not limited to the electric motor 46. When the thermal engine 30 is in an operating mode, the thermal engine 30 is providing motive force to the propulsion unit 40. In this first mode of operation, the engine lubricant 64 is cycled through the first loop 60. As the engine lubricant 64 passes through the thermal engine 30, thermal energy is transferred to the engine lubricant 64 causing the engine lubricant 64 to increase in temperature.

Within the first loop 60, the engine lubricant 64 exits the thermal engine 30 and is directed to the first heat exchanger 56. At the same time in the first mode of operation, the electrical component (e.g., the electric motor 46) is operating and producing thermal energy. That thermal energy may be passed directly or indirectly to the coolant 66 within the second loop 62 as described herein. Within the second loop 62, the electrical component coolant 66 exits the electrical component (e.g., electric motor 46 - or indirectly exits the structure providing heat transfer from the electrical component) and is directed to the first heat exchanger 56. Electrical component coolant 66 from the electrical component (e.g., electric motor 46) that is directed to the first heat exchanger 56 may be described as being at a temperature "T_{ECC1}". Engine lubricant 64 exiting the thermal engine 30 and directed to the first heat exchanger 56 may be described as being at a temperature "T_{TE1}". Because the electrical components 42, 44, 46 operate at a lower temperature level than the hot sections of the thermal engine 30 in this first mode of operation, the coolant 66 entering the first heat exchanger 56 from the electrical component 42, 44, 46 is at a lower temperature than the engine lubricant 64 entering the first heat exchanger 56 from the thermal engine 30; i.e., T_{TE1} > T_{ECC1}. Within the first heat exchanger 56, thermal energy is transferred from the engine lubricant 64 to the electrical component coolant 66, thereby decreasing the engine lubricant 64 temperature and increasing the electrical component coolant 66 temperature. The temperature of the engine lubricant 64 exiting the first heat exchanger 56 may be referred to as "T_{TE2}"; wherein T_{TE2} < T_{TE1}. In this first mode of operation, the engine lubricant 64 exiting the first heat exchanger 56 is directed back to the thermal engine 30 and the cycle repeats itself.

The temperature of the electrical component coolant 66 exiting the first heat exchanger 56 may be referred to as "T_{ECC2}"; wherein T_{ECC2} > T_{ECC1}. It should be noted that the first heat exchanger 56 may be configured based on the thermal requirements of the thermal engine 30 and other factors to ensure the thermal engine lubricant 64 is sufficiently cooled. The system embodiment shown in FIG. 4 includes a second heat exchanger 58. Electrical component coolant 66 exits the first heat exchanger 56 (at T_{ECC2}) and subsequently passes through the second heat exchanger 58. As detailed herein, the second heat exchanger 58 may utilize one of several different fluids for cooling purposes; e.g., air, thermal engine fuel, and the like. The second heat exchanger 58 may be configured based on the thermal requirements of the electrical component (e.g., the electric motor 46) and other factors to ensure the electrical component is sufficiently cooled. The temperature of the electrical component coolant 66 exiting the second heat exchanger 58 may be referred to as "T_{ECC3}"; wherein T_{ECC3} < T_{ECC2}. In this first mode of operation, the electrical component coolant 66 exiting the second heat exchanger 58 is directed back to the electrical component and the cycle repeats itself.

The first mode of operation of the present disclosure thermal management system 38 advantageously leverages the difference in temperature between the electrical component coolant 66 and the lubricant 64 to provide desired cooling of the engine lubricant 64.

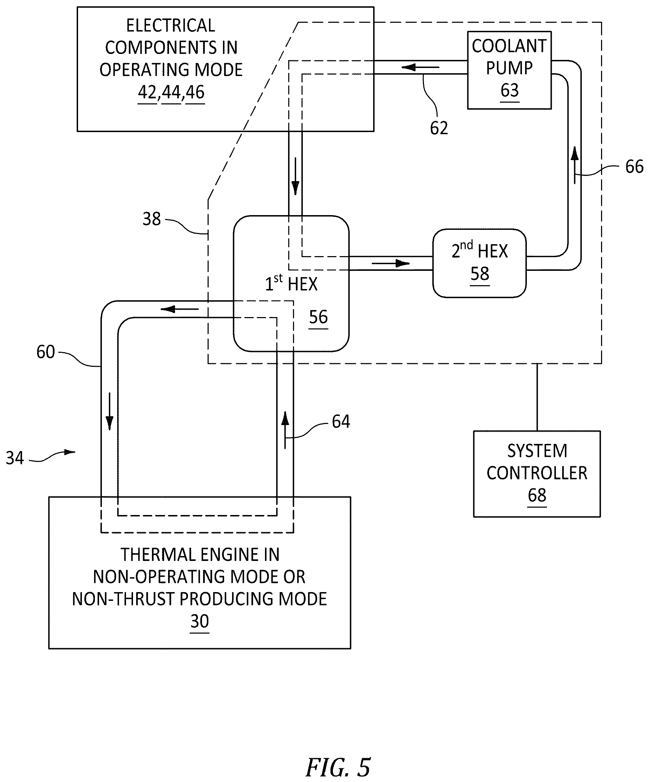

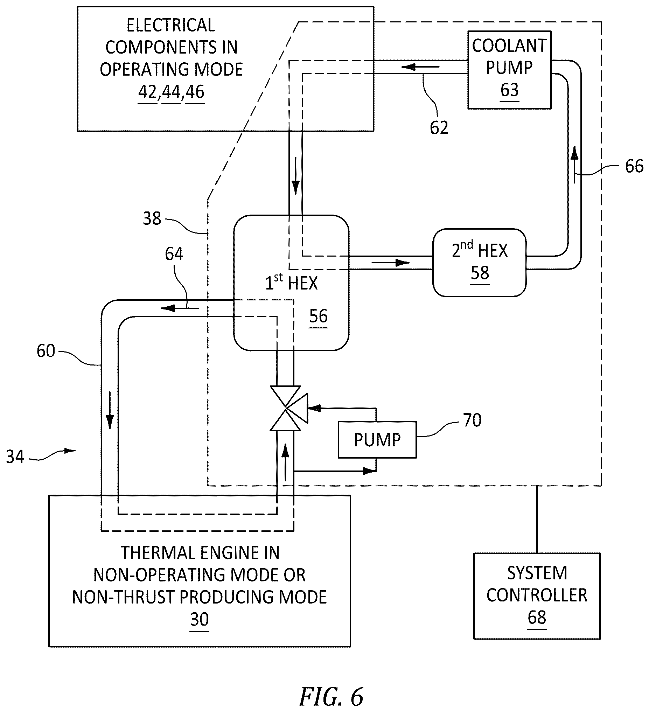

In a second mode of operation (i.e., an engine lubricant 64 heating mode) as shown diagrammatically in FIG. 5, the aircraft propulsion system 26 is operating with the electrical component (e.g., electric motor 46) in an operating mode and the thermal engine 30 in what will be called a "non-operating mode". As indicated herein, non-limiting examples of an electrical component in an operating mode include the electric motor 46 providing motive force to drive the propulsion unit 40, or an electrical generator (not shown) producing electrical energy, or the electrical energy storage device 42 discharging electrical energy, or the like, or any combination thereof. Regarding the thermal engine 30, the term "non-operating mode" refers to an operational mode wherein the thermal engine 30 is not operating, or is windmilling, or is operating at a very low idle and therefore not producing any motive force to the propulsion unit 40. In the non-operating mode, engine lubricant 64 passes through the thermal engine 30. In the embodiment diagrammatically shown in FIG. 5, engine lubricant 64 may pass through the thermal engine 30 based on the propulsion unit 40 windmilling. Alternatively, a pump 70 (e.g., see FIG. 6) external to the thermal engine 30 may be used to pass the engine lubricant 64 through the portions of the thermal engine lubrication system 34, or throughout the entirety of the thermal engine lubrication system 34. In either embodiment (e.g., FIG. 5 or FIG. 6), the engine lubricant 64 may also be cycled through other propulsion system components; e.g., a gear box 36, a lubricant tank, and the like.

Within the second mode of operation, the electrical component (e.g., the electric motor 46) is operating (e.g., the electric motor 46 may be providing motive power to the propulsion unit 40 and the electrical energy storage device 42 may be discharging) and producing thermal energy. That thermal energy may be passed directly or indirectly to the coolant 66 within the second loop 62 as described herein thereby causing the electrical component coolant 66 to increase in temperature. The electrical component coolant 66 exits the electrical component and is directed to the first heat exchanger 56. The electrical component coolant 66 directed toward the first heat exchanger 56 may be described as being at a temperature "T_{ECC1}". At the same time within the first loop 60, the engine lubricant 64 exits the thermal engine 30 and is directed to the first heat exchanger 56. When the thermal engine 30 is disposed in a non-operating mode, the thermal engine 30 is not producing thermal energy and therefore no (or de minimis) thermal energy is transferred from the thermal engine 30 to the engine lubricant 64. The engine lubricant 64 exiting the thermal engine 30 and directed toward the first heat exchanger 56 may be described as being at a temperature "T_{TE1}". In this second mode of operation, the electrical component coolant 66 entering the first heat exchanger 56 from the electrical component is at a higher temperature than the engine lubricant 64 entering the first heat exchanger 56 from the thermal engine 30; i.e., T_{TECC1} > T_{TE1}. Within the first heat exchanger 56, thermal energy is transferred from the electrical component coolant 66 to the engine lubricant 64, thereby decreasing the electrical component coolant 66 temperature and increasing the engine lubricant 64 temperature. The temperature of the engine lubricant 64 exiting the first heat exchanger 56 may be referred to as "T_{TE2}"; wherein T_{TE2} > T_{TE1}. In this second mode of operation, the engine lubricant 64 exiting the first heat exchanger 56 is directed back to the thermal engine 30 and the cycle repeats itself. The temperature of the electrical component coolant 66 exiting the first heat exchanger 56 may be referred to as "T_{ECC2}"; wherein T_{ECC1} > T_{ECC2}. The system embodiments shown in FIGS. 5 and 6 include a second heat exchanger 58. Electrical component coolant 66 exits the first heat exchanger 56 and subsequently passes through the second heat exchanger 58. As detailed herein, the second heat exchanger 58 may utilize one of several different fluids for cooling purposes; e.g., air, thermal engine fuel, and the like. The temperature of the electrical component coolant 66 exiting the second heat exchanger 58 may be referred to as "T_{ECC3}"; wherein T_{ECC3} < T_{ECC2}. In this second mode of operation, the electrical component coolant 66 exiting the second heat exchanger 58 is directed back to the electrical component and the cycle repeats itself.

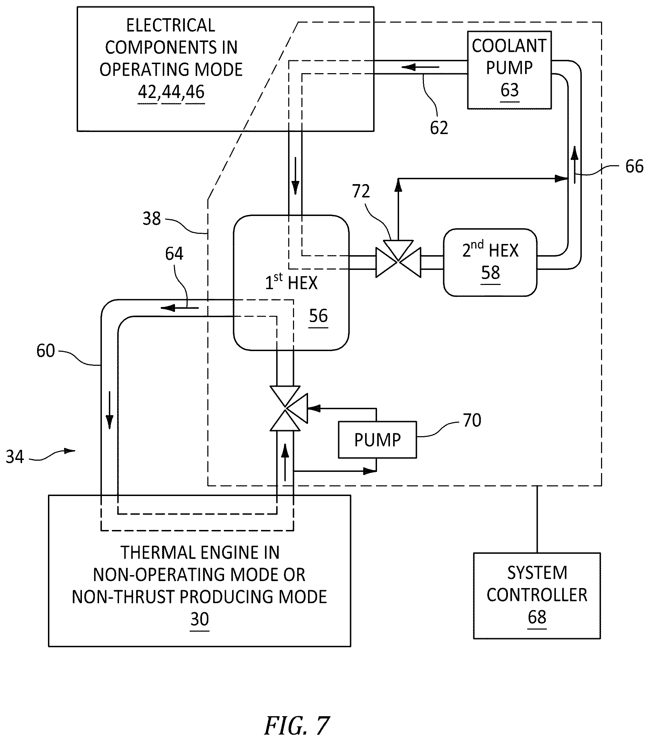

In some present disclosure embodiments, the thermal management system 38 may not include a second heat exchanger 58, or the second heat exchanger 58 may include a plurality of heat exchangers; e.g., in series as detailed herein - see FIG. 4A. In those embodiments that include a second heat exchanger 58, the thermal management system 38 may include control structure (e.g., a bypass valve 72 - see FIG. 7) that may be operated to direct the electrical component coolant 66 to bypass the second heat exchanger 58. For example, if the heat transfer between the thermal engine lubricant 64 and the electrical component coolant 66 within the first heat exchanger 56 is adequate to decrease the temperature of the coolant 66 to a level that is acceptable for cooling the electrical component, then the second heat exchanger 58 may be bypassed. Conversely, if the heat transfer between the thermal engine lubricant 64 and the electrical component coolant 66 within the first heat exchanger 56 is adequate to decrease the temperature of the coolant 66 to a level that is acceptable for cooling the electrical component, then the electrical component coolant 66 may be allowed to pass the second heat exchanger 58 and the other second heat exchanger fluid (e.g., thermal engine fuel, ambient air, or the like) may be bypassed around the second heat exchanger 58 to eliminate the heat transfer within the second heat exchanger 58 that would otherwise occur.

The second mode of operation of the present disclosure thermal management system 38 advantageously leverages the difference in temperature between the electrical component coolant 66 and the engine lubricant 64 to provide desired cooling of the electrical component coolant 66 and desired heating of the engine lubricant 64. In those aircraft propulsion modes wherein the thermal engine 30 is in a non-operating mode, the thermal engine 30 may migrate into a "cold-soaked" condition that may make it difficult to transition the thermal engine 30 from a non-operating mode to an operating mode. Embodiments of the present disclosure thermal management system 38 provide desired thermal energy transfer away from the electrical component coolant 66 (i.e., cool the coolant 66) and at the same time provide desired thermal energy transfer to the engine lubricant 64; i.e., warm the lubricant 64. The viscosity of thermal engine lubricants often vary as a function of their temperature. Engine lubricant 64 below a given temperature may be disposed at a viscosity that impedes flow of the engine lubricant 64 within the thermal engine 30; e.g., within the source tubes, the bearing cavities, the scavenge system, and the like. In some instances, a cold, high viscosity engine lubricant 64 may make it more difficult to re-engage the thermal engine 30 into an operational mode. The present disclosure thermal management system 38 may be configured to provide a level of heat transfer to the engine lubricant 64 that maintains the engine lubricant 64 above a threshold temperature value that avoids engine lubricant 64 distribution problems and facilitates re-engaging the thermal engine 30 into an operational mode. In addition, in those embodiments that utilize thermal engine fuel in the thermal management process (e.g., within the second heat exchanger 58), the transfer of thermal energy to the thermal engine fuel is also understood to provide benefits. The distribution and/or ignition of thermal engine fuel can be negatively affected below certain temperatures (e.g., gelled fuel), which temperature may vary depending on the specific type of thermal engine fuel. Transferring an appropriate amount of thermal energy to the fuel (i.e., warming the fuel) via the present disclosure can mitigate the potential for issues associated with "cold fuel" that may occur when the thermal engine is in a non-operating mode. This aspect of the present disclosure may be particularly beneficial during the process of starting/restarting the thermal engine.

The present disclosure is described above in terms of an aircraft propulsion system 26 in the form of a HEP system to illustrate the present disclosure and its benefits. As stated above, the present disclosure is not limited to the particular HEP embodiment described above; e.g., the present disclosure may be implemented on an aircraft that includes some combination of aircraft propulsion systems powered solely by one or more electric motors ("all-electric"), aircraft propulsion systems powered solely by a thermal engine ("all-thermal engine"), and HEP systems. For example, an aircraft may include an all-electric propulsion system and an all-thermal engine propulsion system on each wing, or an all-electric propulsion system and a HEP system on each wing, and so on. The present disclosure is not limited to any aircraft propulsion systems configuration that includes at least one thermal engine and at least one electric motor. In any of these configurations, the thermal engine(s) and electric motor(s) of the respective propulsion systems may be operated in the first mode of operation (i.e., an engine lubricant cooling mode) described above or in the second mode of operation (i.e., an engine lubricant 64 heating mode) as described above.

While the principles of the disclosure have been described above in connection with specific apparatuses and methods, it is to be clearly understood that this description is made only by way of example and not as limitation on the scope of the disclosure. Specific details are given in the above description to provide a thorough understanding of the embodiments. However, it is understood that the embodiments may be practiced without these specific details.

It is noted that the embodiments may be described as a process which is depicted is a flowchart, a flow diagram, a block diagram, etc. Although any one of these structures may describe the operations as a sequential process, many of the operations can be performed in parallel or concurrently. In addition, the order of the operations may be rearranged. A process may correspond to a method, a function, a procedure, a subroutine, a subprogram, etc.

The singular forms "a," "an," and "the" refer to one or more than one, unless the context clearly dictates otherwise. For example, the term "comprising a specimen" includes single or plural specimens and is considered equivalent to the phrase "comprising at least one specimen." The term "or" refers to a single element of stated alternative elements or a combination of two or more elements unless the context clearly indicates otherwise. As used herein, "comprises" means "includes." Thus, "comprising A or B," means "including A or B, or A and B," without excluding additional elements.

It is noted that various connections are set forth between elements in the present description and drawings (the contents of which are included in this disclosure by way of reference). It is noted that these connections are general and, unless specified otherwise, may be direct or indirect and that this specification is not intended to be limiting in this respect. Any reference to attached, fixed, connected or the like may include permanent, removable, temporary, partial, full and/or any other possible attachment option.

No element, component, or method step in the present disclosure is intended to be dedicated to the public regardless of whether the element, component, or method step is explicitly recited in the claims. No claim element herein is to be construed under the provisions of 35 U.S.C. 112(f) unless the element is expressly recited using the phrase "means for." As used herein, the terms "comprise", "comprising", or any other variation thereof, are intended to cover a non-exclusive inclusion, such that a process, method, article, or apparatus that comprises a list of elements does not include only those elements but may include other elements not expressly listed or inherent to such process, method, article, or apparatus.

While various inventive aspects, concepts and features of the disclosures may be described and illustrated herein as embodied in combination in the exemplary embodiments, these various aspects, concepts, and features may be used in many alternative embodiments, either individually or in various combinations and sub-combinations thereof. Unless expressly excluded herein all such combinations and sub-combinations are intended to be within the scope of the present application. Still further, while various alternative embodiments as to the various aspects, concepts, and features of the disclosures--such as alternative materials, structures, configurations, methods, devices, and components, and so on--may be described herein, such descriptions are not intended to be a complete or exhaustive list of available alternative embodiments, whether presently known or later developed. Those skilled in the art may readily adopt one or more of the inventive aspects, concepts, or features into additional embodiments and uses within the scope of the present application even if such embodiments are not expressly disclosed herein. For example, in the exemplary embodiments described above within the Detailed Description portion of the present specification, elements may be described as individual units and shown as independent of one another to facilitate the description. In alternative embodiments, such elements may be configured as combined elements. It is further noted that various method or process steps for embodiments of the present disclosure are described herein. The description may present method and/or process steps as a particular sequence. However, to the extent that the method or process does not rely on the particular order of steps set forth herein, the method or process should not be limited to the particular sequence of steps described. As one of ordinary skill in the art would appreciate, other sequences of steps may be possible. Therefore, the particular order of the steps set forth in the description should not be construed as a limitation.

## Claims

1. A hybrid-electric propulsion (HEP) system for an aircraft (20), comprising:
a thermal engine (30);
an electrical power motive system (28) having an electric motor (46);
a propulsion unit (40) in drive communication with the thermal engine (30) and the electric motor (46); and
a thermal management system (38) that includes a first heat exchanger (56), wherein the thermal management system (38) is configured to cycle a flow of lubricant (64) into and out of the thermal engine (30) and into and out of the first heat exchanger (56) in a first loop (60), and is configured to cycle a flow of coolant (66) into and out of thermal engagement with the electrical power motive system (28) and into and out of the first heat exchanger (56) in a second loop (62); and
wherein the first heat exchanger (56) is configured to permit heat transfer between the flow of lubricant (64) and the flow of coolant (66) to occur within the first heat exchanger (56).

2. The HEP system of claim 1, wherein the thermal management system (38) further comprises a second heat exchanger (58) in fluid communication with the second loop (62) downstream of the first heat exchanger (56) and upstream of the electrical power motive system (28).

3. The HEP system of claim 2, wherein the thermal management system (38) further comprises a bypass valve that is controllable to bypass at least a portion of the flow of coolant (66) around the second heat exchanger (58).

4. The HEP system of claim 2 or 3, wherein:
the second heat exchanger (58) is configured to receive the coolant (66) within the second loop (62) and is configured to receive a flow of air at an air temperature that is lower than a temperature of the coolant (66) received by the second heat exchanger (58); and/or
the second heat exchanger (58) is configured to receive the coolant (66) within the second loop (62) and is configured to receive a flow of fuel at a fuel temperature that is lower than a temperature of the coolant (66) received by the second heat exchanger (58).

5. The HEP system of claim 2, 3 or 4, wherein the thermal management system (38) is configured to operate in a lubricant cooling mode;
wherein in the lubricant cooling mode the thermal engine (30) is operating to provide motive force to the propulsion unit (40) and provides the lubricant (64) to the first heat exchanger (56) at a first temperature, and the electrical power motive system (28) is operating and provides the coolant (66) to the first heat exchanger (56) at a second temperature, wherein the first temperature is greater than the second temperature; and
wherein the heat transfer between the lubricant (64) and the coolant (66) that occurs within the first heat exchanger (56) causes the lubricant (64) to decrease in temperature from the first temperature to a third temperature, and causes the coolant (66) to increase in temperature from the second temperature to a fourth temperature.

6. The HEP system of claim 5, wherein within the electrical power motive system (28), the electric motor (46) is operating to provide motive force to the propulsion unit (40) and is producing thermal energy that is transferred to the coolant (66).

7. The HEP system of claim 5 or 6, wherein:
the electrical power motive system (28) includes an electrical energy storage device (42) and within the electrical power motive system (28), the electrical energy storage device (42) is operating to provide electrical energy to drive the electric motor (46) and is producing thermal energy that is transferred to the coolant (66); and/or
the electrical power motive system (28) includes an electrical generator and an electrical energy storage device (42), and within the electrical power motive system (28), the electrical generator energy storage device is operating to provide electrical energy to drive the electrical energy storage device (42) and is producing thermal energy that is transferred to the coolant (66).

8. The HEP system of any of claims 2 to 7, wherein the thermal management system (38) is configured to operate in a lubricant heating mode;
wherein in the lubricant heating mode the thermal engine (30) is in a non-operating mode and provides the lubricant (64) to the first heat exchanger (56) at a first temperature, and the electrical power motive system (28) is operating and provides the coolant (66) to the first heat exchanger (56) at a second temperature, wherein the first temperature is less than the second temperature; and
wherein the heat transfer between the lubricant (64) and the coolant (66) that occurs within the first heat exchanger (56) causes the lubricant (64) to increase in temperature from the first temperature to a third temperature, and causes the coolant (66) to decrease in temperature from the second temperature to a fourth temperature.

9. The HEP system of any of claims 5 to 8, wherein the second heat exchanger (58) is configured to cause the coolant (66) to decrease in temperature from the fourth temperature to a fifth temperature.

10. An aircraft propulsion system (26), comprising:
a first aircraft propulsion system (26) that includes a thermal engine (30), a lubrication system (34), and a first propulsion unit (40), wherein the lubrication system (34) is configured to cycle a lubricant (64) through the thermal engine (30), and wherein first aircraft propulsion system (26) is configured to selectively provide motive power to the first propulsion unit (40) using the thermal engine (30);
a second aircraft propulsion system (26) that includes an electric motor (46) and a second propulsion unit (40), wherein second aircraft propulsion system (26) is configured to selectively provide motive power to the second propulsion unit (40) using the electric motor (46); and
a thermal management system (38) that includes a first heat exchanger (56) and a second heat exchanger (58), wherein the thermal management system (38) is configured to cycle a flow of the lubricant (64) into and out of the first heat exchanger (56) in a first loop (60), and is configured to cycle a flow of coolant (66) into and out of thermal engagement with the electric motor (46) and into and out of the first heat exchanger (56) in a second loop (62); and
wherein the first heat exchanger (56) is configured to permit heat transfer between the flow of lubricant (64) and the flow of coolant (66) to occur within the first heat exchanger (56).

11. The aircraft propulsion system (26) of claim 10, wherein the second heat exchanger (58) is in fluid communication with the second loop (62) downstream of the first heat exchanger (56) and upstream of the electric motor (46); and
wherein the thermal management system (38) is configured to operate in a lubricant cooling mode, and in the lubricant cooling mode the thermal engine (30) is providing motive force to the first propulsion unit (40) and provides the lubricant (64) to the first heat exchanger (56) at a first temperature, and the electric motor (46) is providing motive force to the second propulsion unit (40) and the thermal management system (38) cycles coolant (66) to the first heat exchanger (56) at a second temperature, wherein the first temperature is greater than the second temperature; and
wherein the heat transfer between the lubricant (64) and the coolant (66) that occurs within the first heat exchanger (56) causes the lubricant (64) to decrease in temperature from the first temperature to a third temperature, and causes the coolant (66) to increase in temperature from the second temperature to a fourth temperature.

12. The aircraft propulsion system (26) of claim 10 or 11, wherein the second heat exchanger (58) is in fluid communication with the second loop (62) downstream of the first heat exchanger (56) and upstream of the electric motor (46); and
wherein the thermal management system (38) is configured to operate in a lubricant heating mode, and in the lubricant heating mode the thermal engine (30) is in a non-operational mode and provides the lubricant (64) to the first heat exchanger (56) at a first temperature, and the electric motor (46) is providing motive force to the second propulsion unit (40) and the thermal management system (38) cycles coolant (66) to the first heat exchanger (56) at a second temperature, wherein the first temperature is less than the second temperature; and
wherein the heat transfer between the lubricant (64) and the coolant (66) that occurs within the first heat exchanger (56) causes the lubricant (64) to increase in temperature from the first temperature to a third temperature, and causes the coolant (66) to decrease in temperature from the second temperature to a fourth temperature.

13. A method of thermally managing a hybrid-electric propulsion (HEP) system that includes a thermal engine (30), an electrical power motive system (28) having an electric motor (46), and a propulsion unit (40) in drive communication with the thermal engine (30) and the electric motor (46), the method comprising:
cycling a flow of lubricant (64) into and out of the thermal engine (30) and into and out of a first heat exchanger (56) in a first loop (60); and
cycling a flow of coolant (66) into and out of thermal engagement with the electrical power motive system (28) and into and out of the first heat exchanger (56) in a second loop (62);
wherein the first heat exchanger (56) is configured to permit heat transfer between the flow of lubricant (64) and the flow of coolant (66) to occur within the first heat exchanger (56).

14. The method of claim 13, further comprising:
operating the HEP system in a lubricant cooling mode, wherein in the lubricant (64) cooling mode the thermal engine (30) is operating to provide motive force to the propulsion unit (40) and provides the lubricant (64) to the first heat exchanger (56) at a first temperature, and the electrical power motive system (28) is operating and provides the coolant (66) to the first heat exchanger (56) at a second temperature, wherein the first temperature is greater than the second temperature; and
wherein the heat transfer between the lubricant (64) and the coolant (66) that occurs within the first heat exchanger (56) causes the lubricant (64) to decrease in temperature from the first temperature to a third temperature, and causes the coolant (66) to increase in temperature from the second temperature to a fourth temperature,
wherein, optionally, within the electrical power motive system (28), the electric motor (46) is operating to provide motive force to the propulsion unit (40) and is producing thermal energy that is transferred to the coolant (66).

15. The method of claim 13 or 14, further comprising:
operating the HEP system in a lubricant heating mode, wherein in the lubricant heating mode the thermal engine (30) is in a non-operating mode and provides the lubricant (64) to the first heat exchanger (56) at a first temperature, and the electrical power motive system (28) is operating and provides the coolant (66) to the first heat exchanger (56) at a second temperature, wherein the first temperature is less than the second temperature; and
wherein the heat transfer between the lubricant (64) and the coolant (66) that occurs within the first heat exchanger (56) causes the lubricant (64) to increase in temperature from the first temperature to a third temperature, and causes the coolant (66) to decrease in temperature from the second temperature to a fourth temperature,
wherein, optionally, within the electrical power motive system (28), the electric motor (46) is operating to provide motive force to the propulsion unit (40) and is producing thermal energy that is transferred to the coolant (66).
